# EUROPEAN PATENT APPLICATION

(11) **EP 4 742 689 A1**
(43) Date of publication of application: **13.05.2026**
(21) Application number: 24845898.6
(22) Date of filing: 16.07.2024
(51) Int. Cl.: H04N 23/63, H04N 23/62, H04N 23/61, H04N 23/68, H04N 23/73, G06T 7/20, G06T 7/194

(54) **METHOD FOR CAPTURING IMAGE INCLUDING DYNAMIC SCENE, AND ELECTRONIC DEVICE THEREFOR**

(30) Priority: 21.07.2023 KR 20230095422; 11.08.2023 KR 20230105300
(71) Applicant: Samsung Electronics Co., Ltd., Suwon-si, Gyeonggi-do 16677 (KR)
(72) Inventor: LIM, Kwangyong, Suwon-si Gyeonggi-do 16677 (KR)
(74) Representative: Nederlandsch Octrooibureau
(86) International application number: PCT/KR2024/010179
(87) International publication number: WO 2025/023595

(57) **Abstract**

An electronic device according to one embodiment of the present disclosure may comprise: one or more cameras; a display; at least one processor; and a memory for storing instructions. When executed by the at least one processor, the instructions enable the electronic device to: analyze the movement of the electronic device or an object in a preview image while displaying, on the display, the preview image acquired from the one or more cameras; calculate movement information related to the preview image on the basis of the analysis; set at least one capturing parameter on the basis of the calculated movement information in response to the reception of a user input for image capturing; and acquire an image captured on the basis of the set capturing parameter. Other various embodiments identified through the present document are possible.

## Description

### [Technical Field]

The disclosure relates to a method for capturing an image including a dynamic scene, and an electronic device therefor.

### [Background Art]

As carrying portable electronic devices has become commonplace in daily life, the use of cameras of portable electronic devices has significantly increased, and image capture using portable electronic devices is now recognized as an indispensable function to the extent that camera functionality has become a key criterion for selecting a portable electronic device. Recently, as camera functions implemented in portable electronic devices have become more advanced, various technologies have been applied to capture clear images in various capturing environments. For example, in order to acquire an optimal image according to a situation in which a user captures a subject, an automatic capturing mode may be provided that automatically adjusts image capture parameters such as international organization for standardization (ISO) film speed, shutter speed, exposure time, white balance, or focus.

The foregoing information may be provided as related art for the purpose of facilitating an understanding of the disclosure. No assertion or determination is made as to whether any of the foregoing content may be applied as prior art related to the present disclosure.

### [Disclosure of Invention]

### [Technical Solution]

According to an embodiment of the disclosure, an electronic device may include one or more cameras, a display, at least one processor, and memory storing instructions. The instructions, when executed by the at least one processor, may cause the electronic device to, while a preview image acquired from the one or more cameras is displayed on the display, analyze movement of the electronic device or an object within a preview image. The instructions, when executed by the at least one processor, may cause the electronic device to calculate movement information related to the preview image based on the analysis. The instructions, when executed by the at least one processor, may cause the electronic device to, in response to receiving a user input for image capture, configure at least one image capture parameter based on the calculated movement information. The instructions, when executed by the at least one processor, may cause the electronic device to acquire an image acquired based on the configured image capture parameter.

According to an embodiment of the disclosure, a method may include, while displaying a preview image acquired from one or more cameras, analyzing movement of the electronic device or an object within a preview image. The method may include calculating movement information related to the preview image based on the analysis. The method may include, in response to receiving a user input for image capture, configuring at least one image capture parameter based on the calculated movement information. The method may include acquiring a captured image based on the configured image capture parameter.

### [Brief Description of Drawings]

FIG. 1 is a block diagram of an electronic device in a network environment according to an embodiment.
FIG. 2 illustrates a configuration of an electronic device according to an embodiment.
FIG. 3 illustrates a detailed configuration of an electronic device according to an embodiment.
FIG. 4 illustrates a method of capturing an image including a dynamic scene in an electronic device according to an embodiment.
FIG. 5 is a flowchart illustrating a method of operating an electronic device according to an embodiment.
FIG. 6 illustrates a method of analyzing movement during display of a preview screen in an electronic device according to an embodiment.
FIG. 7 is a diagram illustrating a method of configuring an image capture parameter and acquiring an image in an electronic device according to an embodiment.
FIG. 8 is a flowchart illustrating operations performed by a third application according to an embodiment.
FIG. 9 is a flowchart illustrating operations performed by a first application according to an embodiment.
FIG. 10 is a flowchart illustrating operations performed by a second application according to an embodiment.

In describing the drawings, the same or similar components may be denoted by the same or similar reference numerals.

### [Mode for the Invention]

Various embodiments disclosed in the document are described with reference to the accompanying drawings. This is not intended to limit the various embodiments of the disclosure to specific forms, and should be understood to include various modifications, equivalents, and/or alternatives of the disclosure.

Among photo capturing modes of a camera, an automatic capturing mode may calculate image capture parameters (e.g., ISO film speed, shutter speed, exposure time, or white balance) to be configured in the camera based on surrounding environment data collected from a sensor, in order to capture an image with optimal image quality in general situations, and may perform image capture based on the calculated image capture parameters. When the automatic capturing mode is configured, an electronic device may determine values of the image capture parameters based on a lighting environment on the assumption that movement of a subject or a camera is small, in order to address a noise issue. By way of example, in the automatic capturing mode, the electronic device may reduce noise by configuring a minimum ISO film speed value based on a current illuminance value. Such a noise-priority policy may be vulnerable to motion blur when capturing scenes such as sports events or scenes involving movement of a subject, and thus image quality of a captured image may be degraded.

In various embodiments of the document, when an image is captured in an automatic capturing mode, image capture parameters may be calculated based on movement detected from a preview image, and image capture may be performed based on the calculated image capture parameters. Therefore, various embodiments may be provided to obtain clearer capturing results even when capturing scenes involving movement.

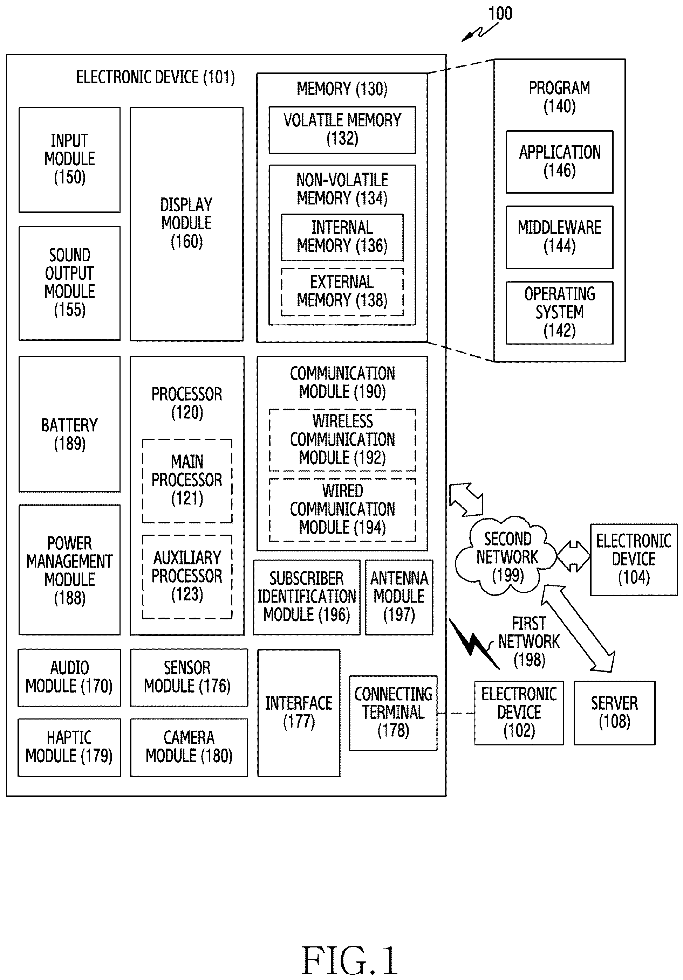

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

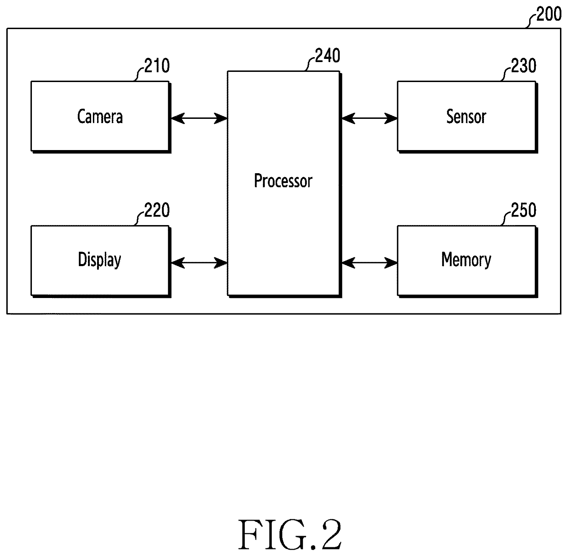

FIG. 2 illustrates a configuration of an electronic device according to an embodiment.

Referring to FIG. 2, an electronic device 200 is a device configured to determine movement information from a preview image acquired through a camera when capturing an image using an automatic capturing mode, and to configure image capture parameters by considering the determined movement information, and may include one or more cameras 210, a display 220, one or more sensors 230, at least one processor 240, or memory 250. In FIG. 2, the electronic device 200 may correspond to the electronic device 101 illustrated in FIG. 1.

In an embodiment, the one or more cameras 210 (e.g., the camera module 180 of FIG. 1) may capture a subject in response to a user input. For example, when a camera application is executed, the one or more cameras 210 may acquire, on a frame-by-frame basis, a preview image including the subject, and upon receiving a user input for image capture (e.g., a shutter button input) while displaying the preview image, may capture an image including the subject. According to various embodiments, when the one or more cameras 210 are configured to the automatic capturing mode, upon receiving the user input for image capture, the one or more cameras 210 may automatically configure one or more image capture parameters (e.g., ISO film speed, shutter speed, exposure time, or white balance) based on surrounding environment data, and may perform image capture based on the configured one or more image capture parameters.

In an embodiment, the display 220 (e.g., the display module 160 of FIG. 1) may display images acquired by one or more cameras 210. For example, when a camera application is executed, the display 220 may display a preview image acquired from the one or more cameras 210.

In an embodiment, the display 220 may include at least one of a liquid crystal display (LCD), a thin film transistor (TFT)-LCD, an organic light emitting diode (OLED) display, a light emitting diode (LED) display, an active matrix organic light emitting diode (AMOLED) display, a flexible display, or a three-dimensional display. In addition, some of these displays may be configured as transparent or light-transmissive displays so that the outside may be viewed therethrough, and may be configured as a transparent display including a transparent OLED (TOLED).

In an embodiment, the one or more sensors 230 (e.g., the sensor module 176 of FIG. 1) may detect physical movement or posture of the electronic device 200. For example, the one or more sensors 230 may detect whether movement of the electronic device 200 has occurred while a preview image is displayed via the display 220. According to various embodiments, the one or more sensors 230 may include a gyro sensor, an acceleration sensor, or various other types of sensors capable of detecting movement of the electronic device 200.

In an embodiment, the memory 250 (e.g., the memory 130 of FIG. 1) may store instructions that, when executed, control at least one processor 240 (e.g., the processor 120 of FIG. 1) to perform various operations. For example, the at least one processor 240 may perform operations for configuring at least one image capture parameter based on movement information determined from a preview image.

In an embodiment, while displaying a preview image acquired from the one or more cameras 210 on the display 220, the at least one processor 240 may identify whether movement of the electronic device 200 or an object within the preview image has occurred.

In an embodiment, while the preview image is displayed, the at least one processor 240 may acquire data related to physical movement of the electronic device 200 from the one or more sensors 230, and may determine whether movement has occurred in the electronic device 200 based on the acquired data. For example, the one or more sensors 230 may include various types of sensors capable of detecting movement of the electronic device 200, including a gyro sensor and/or an acceleration sensor.

In an embodiment, when the at least one processor 240 determines that movement has occurred in the electronic device 200, the at least one processor 240 may determine movement information indicating a degree of movement that has occurred while the preview image is displayed, based on an amount of movement of the electronic device 200 obtained from the data. In this case, the at least one processor 240 may determine that motion blur may occur due to shaking of the electronic device 200 or the camera 210 during image capture, and may determine image capture parameters by considering the movement information calculated for the electronic device 200.

In an embodiment, when the at least one processor 240 determines that no movement has occurred in the electronic device 200, the at least one processor 240 may analyze movement of pixels included in the preview image. According to an embodiment, the at least one processor 240 may estimate pixel movement for an entire region of the preview image. The at least one processor 240 may extract optical flow in the entire region within the preview image, and may estimate the pixel movement based on the extracted optical flow. The at least one processor 240 may extract the optical flow from data acquired using hardware components included in the electronic device 200 and/or data acquired using software programs stored in the memory 250. The optical flow may be obtained based on dense optical flow for estimating movement in the entire region of the preview image, and, when it is difficult to extract the dense optical flow, may be obtained based on movement of feature points such as edges or corner points detected within the preview image.

In an embodiment, the at least one processor 240 may identify one or more objects from the preview image. Upon receiving the preview image, the at least one processor 240 may identify whether the preview image is a first frame acquired from the one or more cameras 210 after a camera application is executed. When the at least one processor 240 identifies that the preview image is the first frame received after execution of the camera application, the at least one processor 240 may generate a background model based on a probability distribution of pixels included in the preview image. For example, the at least one processor 240 may generate the background model based on color values or brightness values of the preview image using a single Gaussian model or a Gaussian mixture model. When the at least one processor 240 identifies that the preview image is not the first frame received after execution of the camera application, the at least one processor 240 may update the generated background model based on the preview image. The at least one processor 240 may distinguish a background region and a foreground region from the preview image based on the background model, and may extract the foreground region. The at least one processor 240 may identify the one or more objects based on the foreground region within the preview image.

In an embodiment, the at least one processor 240 may determine movement information related to the preview image based on pixel movement estimated based on optical flow in an entire region of the preview image and/or based on objects identified in the preview image. For example, the at least one processor 240 may calculate an amount of movement for each object by combining pixel movement estimated for the entire region of the preview image with one or more objects identified in the preview image, and may determine, based on the result of the calculation, movement information indicating a degree of movement that has occurred while the preview image is displayed. In this case, the at least one processor 240 may determine that motion blur may occur due to movement of an object during image capture, and may determine image capture parameters by considering movement information calculated for the object (or the foreground region) within the preview image. According to various embodiments, when a plurality of foreground regions extracted from the preview image exist, the at least one processor 240 may assign weights according to respective areas of the plurality of foreground regions, and may calculate the movement information by combining the plurality of foreground regions (or objects included in the respective foreground regions) with the estimated pixel movement based on the assigned weights. As another example, when no foreground region (or object) extracted from the preview image exists, the at least one processor 240 may determine that motion blur may occur due to movement (or change) of an entire screen during image capture, and may determine, based on the estimated pixel movement, movement information indicating a degree of movement that has occurred while the preview image is displayed. In this case, the at least one processor 240 may determine image capture parameters by considering movement information determined for the entire region of the preview image.

In an embodiment, while displaying the preview image via the display 220, the at least one processor 240 may receive a user input for image capture. For example, the user input may correspond to a shutter button input received via a camera application.

In an embodiment, in response to receiving the user input, the at least one processor 240 may determine at least one parameter for acquiring an image with clear image quality based on movement information determined while the preview image is displayed. The at least one image capture parameter may include at least one of an ISO film speed or a shutter speed of the one or more cameras 210. For example, when movement of the electronic device 200 or movement in the preview image is detected while a preview image is provided in a low-light environment in which a brightness value is less than or equal to a specified value, the at least one processor 240 may determine a larger ISO film speed value than when no movement is detected. As another example, when movement of the electronic device 200 or movement in the preview image is detected while the preview image is provided in the low-light environment, the at least one processor 240 may determine a faster shutter speed than when no movement is detected. The at least one processor 240 may configure the determined image capture parameters in the one or more cameras 210, and may acquire a captured image based on the configuration.

According to various embodiments, the at least one processor 240 may determine to configure image capture parameters without considering movement information, based on analysis of a scene included in the preview image while the preview image is provided. For example, when the scene of the preview image is analyzed as including a moving background such as a propeller, the at least one processor 240 may determine, as an environmental factor of the scene, movement detected from the preview image, and may exclude the movement or apply a reduced weight to the movement when determining the image capture parameters. In addition, when determining the image capture parameters, the at least one processor 240 may determine whether to reflect movement by considering other context related to the scene of the preview image, such as a location, a time, or an object type.

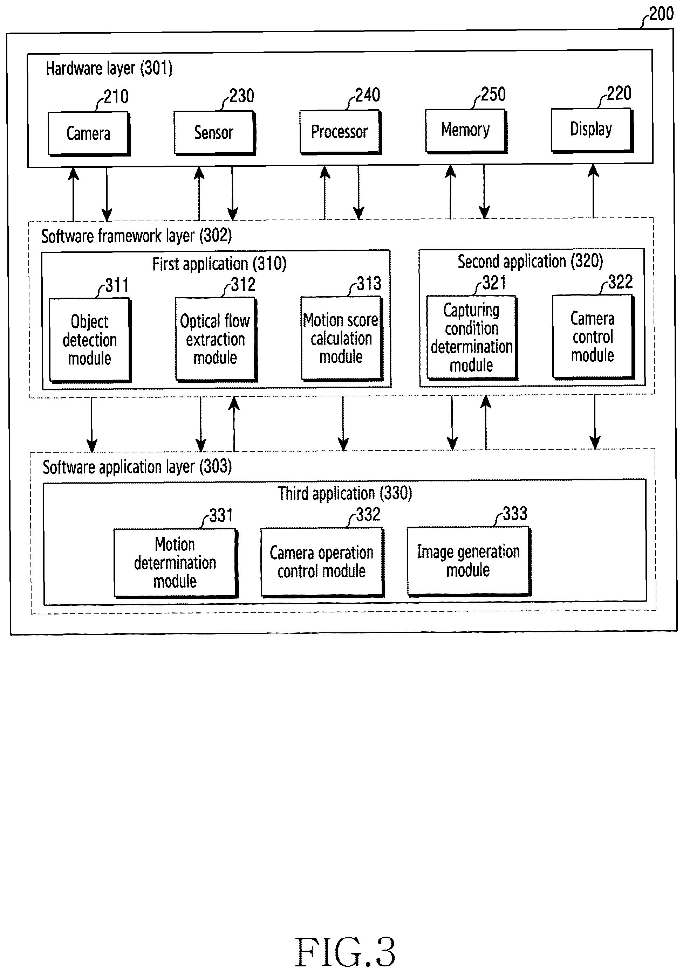

FIG. 3 illustrates a detailed configuration of the electronic device 200 according to an embodiment. Functions or operations described with reference to FIG. 3 may be understood as functions performed by at least one processor 240 (e.g., an application processor) of the electronic device 200 of FIG. 2. For example, an object detection module 311, an optical flow extraction module 312, and a motion score calculation module 313 of a first application 310, a capturing condition determination module 321 and a camera control module 322 of a second application 320, and a motion determination module 331, a camera operation control module 332, and an image generation module 333 of a third application 330 illustrated in FIG. 3 may be implemented as software modules including at least one instruction. The at least one processor 240 may execute instructions stored in the memory 250 to implement the software modules illustrated in FIG. 3, and may control hardware related to the functions (e.g., one or more cameras 210, the display 220, one or more sensors 230, or the memory 250 of FIG. 2). According to various embodiments, the electronic device 200 is not limited to the components illustrated in FIG. 3, and may further include components corresponding to functions required in the electronic device 200 among the components illustrated in FIG. 1.

Referring to FIG. 3, the electronic device 200 may include a hardware layer 301, a software framework layer 302, or a software application layer 303.

In an embodiment, the hardware layer 301 may include one or more cameras 210, the display 220, one or more sensors 230, at least one processor 240, or the memory 250. Components included in the hardware layer 301 may respectively correspond to the components illustrated in FIG. 2.

In an embodiment, the software framework layer 302 may be understood as a hardware abstraction layer (HAL) or a camera software framework for improving portability across various hardware platforms, and may include the first application 310 configured to acquire, analyze, or determine data related to movement of a preview image, and the second application 320 configured to perform image capture.

In an embodiment, the first application 310 may detect an object from a preview image and perform analysis of movement of the object within the preview image, and may include an object detection module 311, an optical flow extraction module 312, or a motion score calculation module 313.

In an embodiment, the object detection module 311 may generate and update a background model for the preview image, and may extract a foreground region within the preview image based on the background model. For example, the background model may be generated and/or updated based on a single Gaussian model or a Gaussian mixture model. The object detection module 311 may detect one or more objects based on the foreground region extracted from the preview image.

In an embodiment, the optical flow extraction module 312 may extract optical flow in an entire region of the preview image. The optical flow extraction module 312 may estimate movement of pixels within the preview image based on the extracted optical flow, and may calculate motion vectors.

In an embodiment, the motion score calculation module 313 may calculate movement of one or more objects within the preview image by combining one or more objects (or foreground regions) detected from the preview image with optical flow extracted from the preview image. The motion score calculation module 313 may quantify movement of the one or more objects included in the preview image as a motion score, and may quantitatively analyze in which region and to what extent motion has occurred within the preview image.

In an embodiment, the second application 320 may perform image capture by configuring image capture parameters of a camera based on movement information analyzed while the preview image is provided, and may include a capturing condition determination module 321 or a camera control module 322.

In an embodiment, the capturing condition determination module 321 may determine image capture parameters based on a type of movement that has occurred while the preview image is provided, an analyzed motion score, and/or a lighting environment. The image capture parameters may be values configured in the camera 210 to acquire an image with clear image quality, and may include at least one of an ISO film speed or a shutter speed.

In an embodiment, upon receiving a user input requesting image capture (e.g., a shutter button input), the camera control module 322 may configure the determined image capture parameters in the camera 210 and may capture an image based on the configured image capture parameters.

In an embodiment, the software application layer 303 may control an overall operation flow and may include a third application 330.

In an embodiment, the third application 330 may be understood as a camera application, and may include a motion determination module 331, a camera operation control module 332, or an image generation module 333.

In an embodiment, the motion determination module 331 may determine whether movement of the electronic device 200 has occurred while the preview image is provided. The motion determination module 331 may determine whether movement has occurred in the electronic device 200, based on data acquired from one or more sensors 230. The one or more sensors 230 may include various types of sensors capable of detecting movement of the electronic device 200, including a gyro sensor and/or an acceleration sensor. For example, when it is determined that movement has occurred in the electronic device 200 while the preview image is provided, the motion determination module 331 may transmit information related to movement of the electronic device 200 to the first application 310 for generation and/or update of the background model. According to various embodiments, an operation of the motion determination module 331 may be performed by the first application 310.

In an embodiment, the camera operation control module 332 may control overall operations of hardware and software of the electronic device 200 while the third application 330 is executed.

In an embodiment, the image generation module 333 may acquire an image captured by the second application 320 and may store the image in the memory 250.

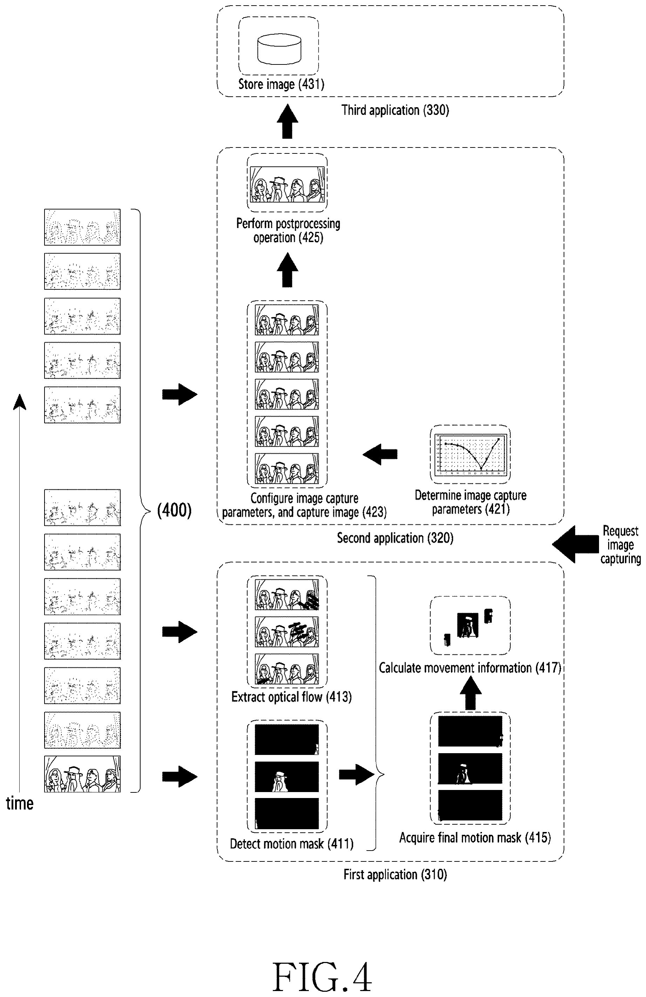

FIG. 4 illustrates a method of capturing an image including a dynamic scene in the electronic device 200 according to an embodiment.

Referring to FIG. 4, when the third application 330 (e.g., a camera application) is executed, the electronic device 200 may acquire preview images 400 through one or more cameras (e.g., the camera 210 of FIG. 2) and may provide the acquired preview images 400 via a display (e.g., the display 220 of FIG. 2). According to various embodiments, the preview images 400 may be acquired on a frame-by-frame basis at specified time intervals.

In an embodiment, the electronic device 200 may analyze movement related to the preview images using the first application 310. For example, the electronic device 200 may detect a motion mask 411 of the preview images using the first application 310. The electronic device 200 may distinguish a background region and a foreground region based on a background model for the preview images while the preview images are being provided, and may detect the motion mask based on the foreground region. As another example, the electronic device 200 may extract optical flow 413 in an entire region of the preview images, and may estimate pixel movement of the preview images based on the extracted optical flow. According to various embodiments, the motion mask detection 411 and the optical flow extraction 413 for the preview images may be performed in parallel via the first application 310.

In an embodiment, the electronic device 200 may acquire a final motion mask 415 related to movement for each foreground region within the preview image by combining the detected motion mask and the extracted optical flow using the first application 310. The electronic device 200 may calculate movement information 417 related to the preview image based on the acquired final motion mask. According to various embodiments, when no foreground region is detected in the preview image, the electronic device 200 may calculate movement information 417 related to the preview image based on optical flow extracted for an entire region of the preview image. According to various embodiments, when movement of the electronic device 200 is detected while the preview image is provided, the electronic device 200 may calculate movement information 417 related to the preview image based on data related to movement of the electronic device 200 detected from one or more sensors (e.g., the sensor 230 of FIG. 2), without considering the acquired final motion mask and the extracted optical flow. Whether movement of the electronic device 200 has occurred may be determined by the third application 330 and transmitted to the first application, or may be directly determined by the first application 310 based on sensing data acquired from one or more sensors 230 (e.g., a gyro sensor or an acceleration sensor).

In an embodiment, when a capturing request is received from a user while providing the preview image, the electronic device 200 may configure image capture parameters of a camera using the second application 320. For example, the electronic device 200 may determine image capture parameters 421 for acquiring an image with clear image quality based on the calculated movement information related to the preview image by using the second application 320. The image capture parameters may include at least one of an ISO film speed or a shutter speed. The electronic device 200 may configure the determined image capture parameters in one or more cameras 210 and may perform image capture 423. According to various embodiments, the electronic device 200 may perform a post-processing operation 425 on the captured image by using the second application 320. For example, when an image is acquired using a multi-frame composition technique, the electronic device 200 may capture a plurality of preview images acquired on a frame-by-frame basis and may combine the captured preview images to generate a single image. As another example, the electronic device 200 may improve image quality of the captured image by adjusting brightness, color, or contrast.

In an embodiment, the electronic device 200 may acquire, using the third application 330, an image that has been captured and post-processed by the second application 320, and may store the image in memory (e.g., the memory 250 of FIG. 2) 431.

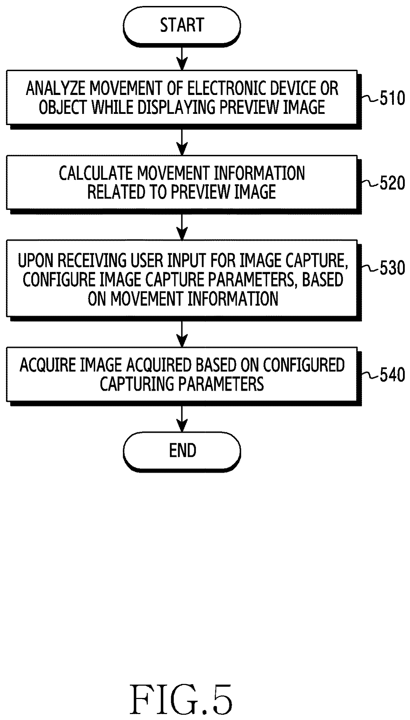

FIG. 5 is a flowchart illustrating a method of operating an electronic device according to an embodiment. According to an embodiment, when capturing an image using an automatic capturing mode, the electronic device 200 may determine movement information from a preview image acquired through a camera and may configure image capture parameters by considering the determined movement information, and may correspond to the electronic device 101 illustrated in FIG. 1. Operations of FIG. 5 may be performed by at least one processor included in the electronic device 200 (e.g., the processor 120 of FIG. 1 or the at least one processor 240 of FIG. 2).

Referring to FIG. 5, in operation 510, the electronic device 200 may analyze movement of the electronic device 200 or an object within a preview image while displaying, on a display (e.g., the display 220 of FIG. 2), the preview image acquired from one or more cameras (e.g., the camera 210 of FIG. 2) after execution of a camera application. In operation 510, the electronic device 200 may identify whether movement of the electronic device 200 or an object within the preview image has occurred while the preview image is displayed. For example, the electronic device 200 may determine whether movement has occurred in the electronic device 200 based on data related to physical movement of the electronic device 200 acquired from one or more sensors (e.g., the sensor 230 of FIG. 2) while the preview image is displayed. The one or more sensors 230 may include various types of sensors capable of detecting movement of the electronic device 200, including a gyro sensor and/or an acceleration sensor. When it is determined that movement has occurred in the electronic device 200, the electronic device 200 may determine a type of movement that has occurred while displaying the preview image as movement of the electronic device 200 (or movement of the camera 210).

According to an embodiment, in operation 510, when it is determined that no movement has occurred in the electronic device 200, the electronic device 200 may analyze movement of pixels included in the preview image. For example, the electronic device 200 may extract optical flow in an entire region of the preview image and may estimate pixel movement for the entire region of the preview image based on the extracted optical flow. The optical flow may be obtained based on dense optical flow for estimating movement in the entire region of the preview image, and, when it is difficult to extract the dense optical flow, may be obtained based on movement of feature points such as edges or corner points detected within the preview image. According to an embodiment, the electronic device 200 may identify one or more objects from the preview image. The electronic device 200 may distinguish a background region and a foreground region from the preview image based on a background model for the preview image, and may extract the foreground region. The electronic device 200 may identify the one or more objects based on the foreground region within the preview image. According to an embodiment, the electronic device 200 may determine movement of objects within the preview image and/or pixel movement for the entire region during display of the preview image, based on pixel movement estimated based on optical flow in the entire region of the preview image and/or objects identified from the preview image.

According to various embodiments, when a first frame of a preview image is received from the one or more cameras 210 after a camera application is executed, the electronic device 200 may generate a background model based on a probability distribution of pixels included in the preview image. For example, the electronic device 200 may generate the background model based on color values or brightness values of the preview image using a single Gaussian model or a Gaussian mixture model. The electronic device 200 may update the background model each time a subsequent frame is received after receiving the first frame of the preview image.

According to an embodiment, in operation 520, the electronic device 200 may calculate movement information related to the preview image based on analysis of movement detected during the display of the preview image. According to various embodiments, when it is determined, as the result of the analysis, that movement has occurred in the electronic device 200, the electronic device 200 may identify an amount of movement of the electronic device 200 based on data acquired from the one or more sensors 230, and may calculate the movement information based on the identified amount of movement of the electronic device 200. The movement information may numerically represent a degree of movement that has occurred while the preview image is displayed.

According to various embodiments, in operation 520, when it is determined, as the result of the analysis, that no movement has occurred in the electronic device 200, the electronic device 200 may calculate an amount of movement for each object by combining pixel movement estimated for an entire region of the preview image with one or more objects identified in the preview image, and may determine the movement information based on the calculated amount of movement for each object. According to various embodiments, when a plurality of foreground regions extracted from the preview image exist, the electronic device 200 may assign weights according to respective areas of the plurality of foreground regions, and may calculate the movement information by combining, based on the assigned weights, the plurality of foreground regions (or objects included in the respective foreground regions) and the estimated pixel movement. According to various embodiments, when no foreground region (or object) extracted from the preview image exists, the electronic device 200 may calculate movement information indicating a degree of movement that has occurred during the display of the preview image, based on the estimated pixel movement.

According to an embodiment, in operation 530, when a user input for image capture is received while the preview image is displayed, the electronic device 200 may configure at least one image capture parameter for acquiring an image with clear image quality based on the calculated movement information. Here, the user input may correspond to a shutter button input received via a camera application. The at least one parameter may include at least one of an ISO film speed or a shutter speed of the one or more cameras 210. For example, when movement of the electronic device 200 or movement in the preview image is detected while the preview image is provided in a low-light environment in which a brightness value is less than or equal to a specified value, the electronic device 200 may configure a larger ISO film speed value than when no movement is detected. As another example, when movement of the electronic device 200 or movement in the preview image is detected while the preview image is provided in the low-light environment, the electronic device 200 may configure a faster shutter speed than when no movement is detected.

According to an embodiment, in operation 540, the electronic device 200 may perform image capture based on the configured image capture parameters and may acquire the captured image.

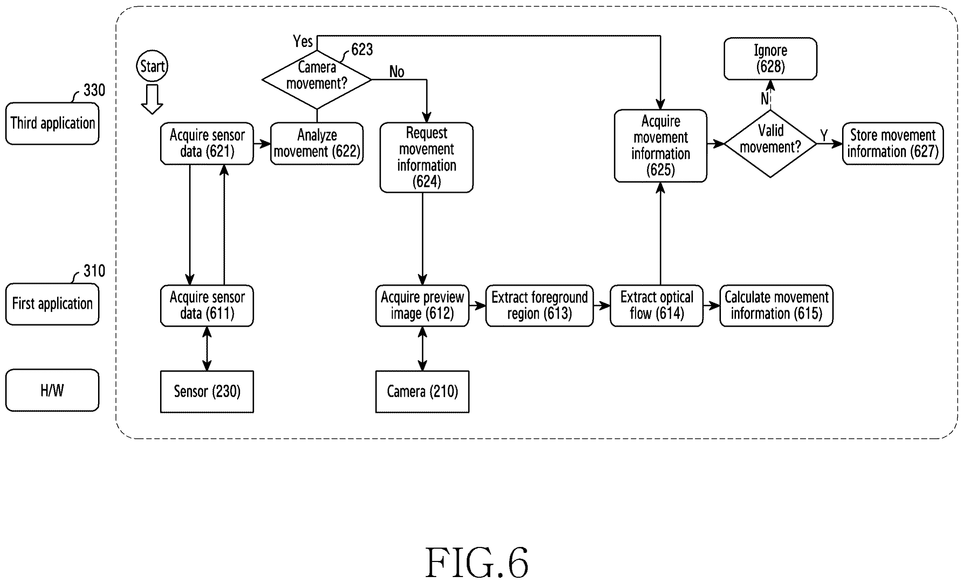

FIG. 6 illustrates a method of analyzing movement while displaying a preview screen in an electronic device according to an embodiment. In FIG. 6, operations of the first application 310 and/or the third application 330 may be understood as functions performed by at least one processor (e.g., the processor 120 of FIG. 1 or the at least one processor 240 of FIG. 2) included in the electronic device 200.

Referring to FIG. 6, when the third application 330 (e.g., a camera application) is executed, the first application 310 and/or the third application 330 may acquire data detected from the one or more sensors (e.g., the sensor 230 of FIG. 2) (operations 611, 621). The data acquired from the one or more sensors 230 may include data related to physical movement of the electronic device 200 and/or data related to a current lighting environment.

In an embodiment, the third application 330 may analyze movement of the electronic device 200 based on the data (operation 622) and may determine whether camera movement has occurred, based on the analysis (operation 623). For example, when movement of the electronic device 200 is present, the third application 330 may determine that camera movement has occurred. When it is determined that camera movement has occurred (operation 623-Yes), the third application 330 may acquire movement information based on the camera movement (operation 625). When it is determined that camera movement has not occurred (operation 623-No), the third application 330 may request movement information analyzed for the preview image from the first application 310 (operation 624).

In an embodiment, the first application 310 may acquire a preview image from one or more cameras (e.g., the camera 210 of FIG. 2) (operation 612). When the preview image is a first frame received after the third application 330 is executed, the first application 310 may generate a background model based on a probability distribution of pixels included in the preview image. The first application 310 may update the background model based on subsequent frames received after the first frame. The first application 310 may extract a foreground region from the preview image based on the background model (operation 613). The first application 310 may measure optical flow in an entire region of the preview image, and may extract movement of pixels within the preview image based on the measured optical flow (operation 614). The first application 310 may calculate movement information for the foreground region by combining the foreground region of the preview image with movement of pixels within the preview image (operation 615). According to various embodiments, when a plurality of foreground regions extracted from the preview image exist, the first application 310 may assign weights according to respective areas of the plurality of foreground regions, and may calculate movement information by combining, based on the assigned weights, the plurality of foreground regions and the estimated pixel movement. According to various embodiments, when no foreground region is extracted from the preview image, the first application 310 may calculate movement information based on pixel movement extracted based on optical flow in the entire region of the preview image.

In an embodiment, the third application 330 may obtain movement information analyzed for the preview image from the first application 310 (operation 625). The third application 330 may determine whether the obtained movement information corresponds to valid (or meaningful) movement with respect to the preview image (operation 626). When it is determined that the obtained movement information does not correspond to valid movement (operation 626-No), the movement information may be ignored (operation 628). When it is determined that the obtained movement information corresponds to valid movement (operation 626-Yes), the third application 330 may store the movement information in the memory (e.g., the memory 250 of FIG. 2).

According to various embodiments, the operations described with reference to FIG. 6 may be repeatedly performed each time the third application 330 is executed to acquire preview images on a frame-by-frame basis from the one or more cameras 210.

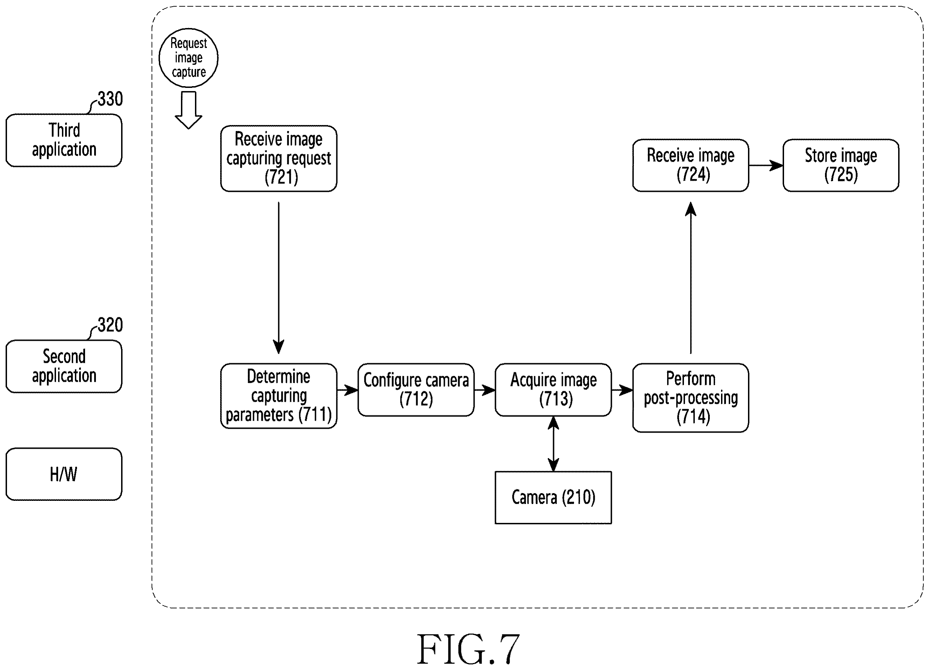

FIG. 7 illustrates a method of configuring image capture parameters and acquiring an image in an electronic device according to an embodiment. In FIG. 7, operations of the second application 320 and/or the third application 330 may be understood as functions performed by at least one processor (e.g., the processor 120 of FIG. 1 or the at least one processor 240 of FIG. 2) included in the electronic device 200.

Referring to FIG. 7, the third application 330 (e.g., a camera application) may receive an image capture request from a user (operation 721). The image capture request may correspond to a capturing button (or a shutter button) input via an execution screen of the third application 330.

In an embodiment, in response to receiving the image capture request, the second application 320 may determine image capture parameters based on movement information analyzed while a preview image is provided from the third application 330 (operation 711). The image capture parameters may include at least one of an ISO film speed or a shutter speed of one or more cameras (e.g., the camera 210 of FIG. 2). The second application 320 may configure the one or more cameras based on the determined image capture parameters (operation 712) and may acquire a captured image (operation 713). The second application may perform post-processing operations on the captured image (operation 714) and may transmit a post-processed image to the third application 330. The post-processing operation may include an operation for improving image quality of the captured image. For example, the second application 320 may capture and combine a plurality of preview images acquired on a frame-by-frame basis to generate a single image, or may perform an operation for adjusting brightness, color, or contrast of the captured image.

In an embodiment, the third application 330 may receive the post-processed image from the second application 320, (operation 724), and may store the image in the memory (e.g., the memory 250 of FIG. 2) (operation 725).

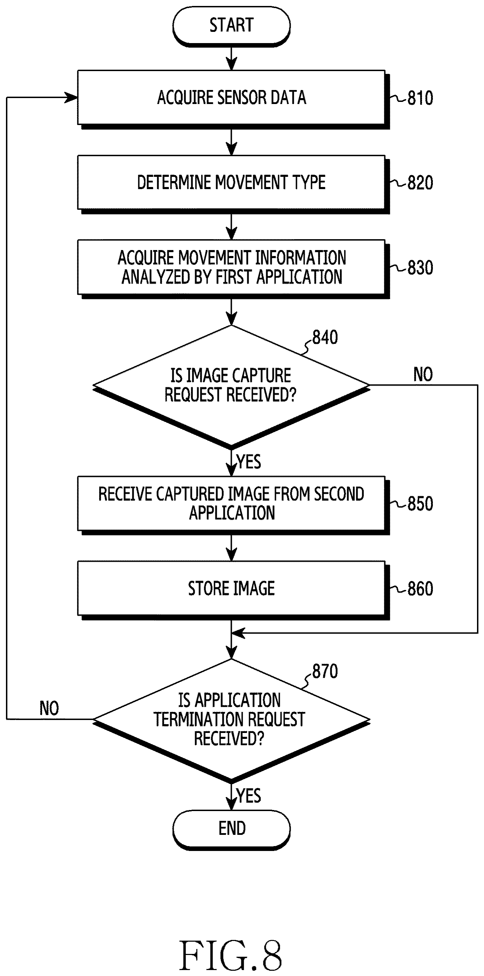

FIG. 8 is a flowchart illustrating operations performed by a third application 330 according to an embodiment. Operations of the third application described with reference to FIG. 8 may be understood as functions performed by at least one processor (e.g., the processor 120 of FIG. 1 or the at least one processor 240 of FIG. 2) included in the electronic device 200.

Referring to FIG. 8, in operation 810, while the third application 330 is executed and a preview image is provided, the third application 330 may acquire data related to physical movement of the electronic device 200 from one or more sensors (e.g., the sensor 230 of FIG. 2). For example, the one or more sensors 230 may include various types of sensors capable of detecting movement of the electronic device 200, including a gyro sensor and/or an acceleration sensor.

According to an embodiment, in operation 820, the third application 330 may determine a type of movement detected while the preview image is provided, based on the acquired data. For example, when it is identified, based on the acquired data, that movement has occurred in the electronic device 200, the third application 330 may determine the type of movement that has occurred while displaying the preview image as movement of the electronic device 200 (or movement of the camera 210). As another example, when it is identified, based on the acquired data, that no movement has occurred in the electronic device 200, the third application 330 may request the first application 310 to analyze movement of pixels included in the preview image.

According to an embodiment, in operation 830, the third application 330 may obtain movement information related to the preview image analyzed by the first application 310.

According to an embodiment, in operation 840, the third application 330 may determine whether a user capturing request has been received. The capturing request may correspond to a capturing button (or a shutter button) input via an execution screen of the third application 330.

When it is determined, a result of operation 840, that the user capturing request has been received (operation 840-Yes), the third application 330 may acquire, in operation 850, a captured image from the second application 320. The image acquired in operation 850 may be an image which has been captured by the second application 320 in response to the capturing request and for which post-processing operations for improving image quality have been completed. The third application 330 may store the acquired image in the memory of the electronic device 200 (e.g., the memory 130 of FIG. 1 or the memory 250 of FIG. 2) in operation 860.

When it is determined, as a result of operation 840, that the user capturing request has not been received (operation 840-No), the third application 330 may perform no additional operation and may wait for a user input.

According to an embodiment, in operation 870, the third application 330 may identify whether an application termination request has been received from a user. When it is identified, as a result of operation 870, that the application termination request has been received (operation 870-Yes), execution of the third application 330 may be terminated. When it is determined, as a result of operation 870, that the application termination request has not been received (operation 870-No), the third application 330 may repeatedly perform the display and movement analysis of preview images acquired from one or more cameras (e.g., the camera module 180 of FIG. 1 or the camera 210 of FIG. 2) while the execution of the third application 330 is maintained.

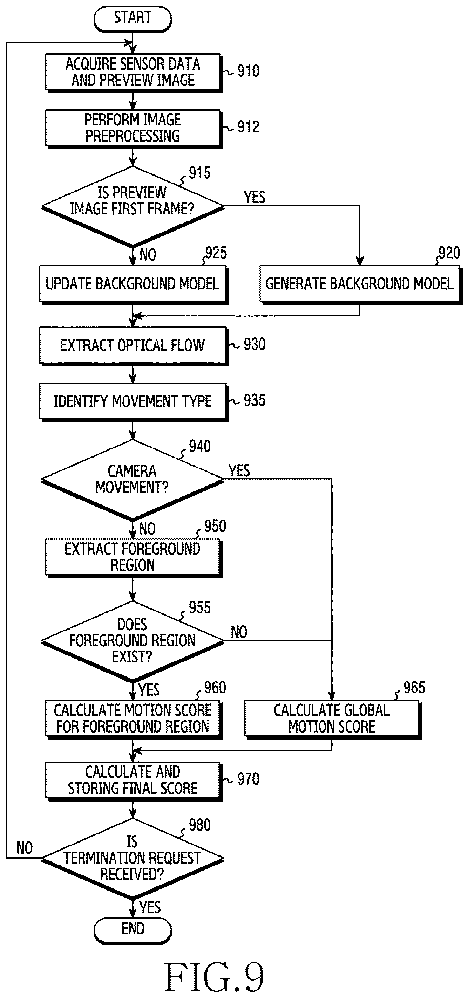

FIG. 9 is a flowchart illustrating operations performed by a first application according to an embodiment. Operations of the first application described with reference to FIG. 9 may be understood as functions performed by at least one processor (e.g., the processor 120 of FIG. 1 or the at least one processor 240 of FIG. 2) included in the electronic device 200.

Referring to FIG. 9, in operation 910, in response to execution of a third application (e.g., a camera application), the first application 310 may acquire sensor data and preview images. For example, the first application 310 may acquire data related to physical movement of the electronic device 200 from one or more sensors (e.g., the sensor 230 of FIG. 2). For example, the one or more sensors 230 may include various types of sensors capable of detecting movement of the electronic device 200, including a gyro sensor and/or an acceleration sensor. As another example, the first application 310 may acquire the preview images from one or more cameras (e.g., the camera module 180 of FIG. 1 or the camera 210 of FIG. 2).

According to an embodiment, in operation 912, the first application 310 may perform preprocessing on the acquired preview images. For example, the first application 310 may resize preview images acquired from the one or more cameras 210 to a size displayable on a display (e.g., the display module 160 of FIG. 1 or the display 220 of FIG. 2), and/or may remove noise included in the preview images.

According to an embodiment, in operation 915, the first application 310 may determine whether the acquired preview image is a first frame received after execution of the third application 330. When it is determined, as a result of operation 915, that the preview image is the first frame received after execution of the third application 330 (operation 915-Yes), the first application 310 may generate a background model based on a probability distribution of pixels included in the preview image in operation 920. The background model may be generated based on a single Gaussian model or a Gaussian mixture model. When it is determined, as a result of operation 915, that the preview image is not the first frame received after execution of the third application 330 (operation 915-No), the first application 310 may update the background model based on the preview image in operation 925.

According to an embodiment, in operation 930, the first application 310 may extract optical flow in an entire region of the preview image. The first application 310 may estimate movement of pixels within the preview image based on the extracted optical flow.

According to an embodiment, in operation 935, the first application 310 may identify a type of movement detected while the preview image is provided. For example, the first application 310 may identify the type of movement based on data related to movement of the electronic device 200 received from the third application 330. As another example, the first application 310 may determine whether movement has occurred in the electronic device 200, based on sensor data acquired from the one or more sensors 230, and may identify the type of movement based on the determination.

According to an embodiment, in operation 940, the first application 310 may determine whether camera movement has occurred, based on the identified type of movement. When movement of the electronic device 200 is identified, the first application 310 may determine that camera movement has occurred. When it is determined, as a result of operation 940, that camera movement has occurred (operation 940-Yes), the first application 310 may calculate a global motion score for the preview image based on data related to movement of the electronic device 200 in operation 965.

When it is determined, as a result of operation 940, that camera movement has not occurred (operation 940-No), the first application 310 may distinguish a background region and a foreground region from the preview image based on the background model and may extract the foreground region in operation 950.

According to an embodiment, in operation 955, the first application 310 may determine whether a foreground region extracted from the preview image exists. When it is determined, as a result of operation 955, that no foreground region extracted from the preview image exists (operation 955-No), the first application 310 may calculate a global motion score for the preview image in operation 965 based on movement of pixels within the preview image estimated based on optical flow of the preview image. When it is determined, as a result of operation 955, that one or more foreground regions extracted from the preview image exist (operation 955-Yes), the first application 310 may calculate a motion score for each foreground region within the preview image by combining the one or more foreground regions with estimated movement of pixels in operation 960.

According to an embodiment, in operation 970, the first application 310 may calculate a final score based on the calculated motion score for each foreground region and/or the global motion score for the preview image, and may store the calculated final score in the memory (e.g., the memory 130 of FIG. 1 or the memory 250 of FIG. 2). The final score may be used in a process of determining image capture parameters by taking movement of the preview image into account after the user's capture request has been input.

According to an embodiment, in operation 980, the first application 310 may identify whether an application termination request for the third application 330 has been received from a user. When it is identified, as a result of operation 980, that the application termination request has been received (operation 980-Yes), the first application 310 may terminate determination of movement of the preview image. When it is identified, as a result of operation 980, that the application termination request has not been received (operation 980-No), the first application 310 may repeatedly perform acquisition of preview images and determination of motion for the preview images while execution of the third application 330 is maintained.

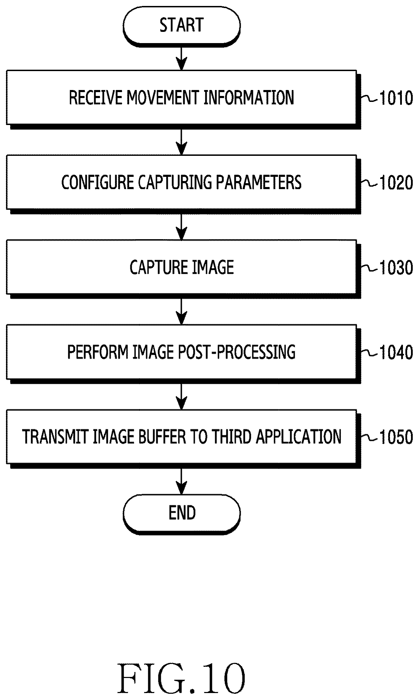

FIG. 10 is a flowchart illustrating operations performed by a second application according to an embodiment. Operations of the second application described with reference to FIG. 10 may be understood as functions performed by at least one processor (e.g., the processor 120 of FIG. 1 or the at least one processor 240 of FIG. 2) included in the electronic device 200.

Referring to FIG. 10, in operation 1010, in response to a user capturing request received via the third application 330, the second application 320 may receive movement information calculated while a preview image is provided from the third application 330. The movement information may be calculated in a form of a motion score numerically representing global motion of the preview image and/or movement of each foreground region of the preview image.

According to an embodiment, in operation 1020, the second application 320 may configure at least one image capture parameter based on the movement information received from the third application 330. The image capture parameter may include at least one of an ISO film speed or a shutter speed. For example, when movement of the electronic device 200 or movement in the preview image is detected while the preview image is provided in a low-light environment in which a brightness value is less than or equal to a specified value, the second application 320 may configure a larger ISO film speed value than when no movement is detected. As another example, when movement of the electronic device 200 or movement in the preview image is detected while the preview image is provided in the low-light environment, the second application 320 may configure a faster shutter speed than when no movement is detected. According to various embodiments, the second application 320 may apply a weight for configuring image capture parameters, based on the motion score calculated during the provision of the preview image.

According to an embodiment, in operation 1030, the second application 320 may perform image capture based on the configured image capture parameters and may acquire a captured image.

According to an embodiment, in operation 1040, the second application 320 may perform image post-processing on the captured image. For example, when an image is acquired using a multi-frame composition technique, the second application 320 may capture and combine a plurality of preview images acquired on a frame-by-frame basis to generate a single image. As another example, the second application 320 may improve image quality of the captured image by adjusting brightness, color, or contrast.

According to an embodiment, in operation 1050, the second application 320 may transmit a final image buffer for which post-processing has been completed to the third application 330 and may terminate a process related to image capture.

According to an embodiment, an electronic device (e.g., the electronic device 200) may include one or more cameras 210 (e.g., the camera 210), a display 220 (e.g., the display 220), at least one processor 240 (e.g., the processor 240) operatively connected to the one or more cameras and the display, and memory 250 (e.g., the memory 250) operatively connected to the at least one processor. The memory may store instructions which, when executed, cause the at least one processor to analyze movement of the electronic device or an object within a preview image while displaying, on the display, the preview image acquired from the one or more cameras, calculate movement information related to the preview image based on the analysis, in response to receiving a user input for image capture, configure at least one image capture parameter based on the calculated movement information, and acquire an image captured based on the configured image capture parameter.

In an embodiment, the electronic device may further comprise one or more sensors (e.g., the sensor 230) configured to detect movement of the electronic device, and the instructions may cause the at least one processor to determine whether movement of the electronic device has occurred, based on data acquired from the one or more sensors while the preview image is displayed on the display, and when it is determined that movement of the electronic device has occurred, determine movement information related to the preview image based on the data acquired from the one or more sensors.

In an embodiment, the instructions may cause the at least one processor to, when it is determined that no movement of the electronic device has occurred, estimate pixel movement for an entire region of the preview image, identify one or more objects from the preview image, and determine movement information related to the preview image based on the estimated pixel movement and the identified one or more objects.

In an embodiment, the instructions may cause the at least one processor to extract optical flow in the entire region of the preview image and estimate the pixel movement based on the extracted optical flow.

In an embodiment, the instructions may cause the at least one processor to, when no object identified from the preview image exists, determine movement information related to the preview image based on the estimated pixel movement.

In an embodiment, the instructions may cause the at least one processor to distinguish a background region and a foreground region from the preview image and identify the one or more objects based on the foreground region in the preview image.

In an embodiment, the instructions may cause the at least one processor to determine weights according to respective areas of one or more foreground regions included in the preview image, and determine movement information related to the preview image by combining, based on the determined weights, objects included in each of the one or more foreground regions with the estimated pixel movement.

In an embodiment, the instructions may cause the at least one processor to, upon receiving the preview image, determine whether the preview image is a first frame acquired from the one or more cameras after execution of a camera application, when the preview image is identified as the first frame, generate a background model based on a probability distribution of pixels included in the preview image, and extract a foreground region of the preview image based on the generated background model.

In an embodiment, the instructions may cause the at least one processor to, when the preview image is identified as not being the first frame, update the background model based on the preview image.

In an embodiment, the image capture parameter may include at least one of an international organization for standardization (ISO) film speed or a shutter speed of the one or more cameras.

According to an embodiment, a method of operating an electronic device (e.g., the electronic device 200) may include analyzing, while displaying a preview image acquired from one or more cameras, movement of the electronic device or an object within the preview image, calculating movement information related to the preview image based on the analysis, in response to receiving a user input for image capture, configuring at least one image capture parameter based on the calculated movement information, and acquiring an image acquired based on the configured image capture parameter.

In an embodiment, the analyzing of movement of the electronic device or an object within the preview image may include determining whether movement of the electronic device has occurred, based on data acquired from one or more sensors while the preview image is displayed on the display, and when it is determined that movement of the electronic device has occurred, determining movement information related to the preview image, based on the data acquired from the one or more sensors.

In an embodiment, the analyzing of movement of the electronic device or an object within the preview image may include, when it is determined that no movement of the electronic device has occurred, estimating pixel movement for an entire region of the preview image, identifying one or more objects from the preview image, and determining movement information related to the preview image based on the estimated pixel movement and the identified one or more objects.

In an embodiment, the estimating of pixel movement for an entire region of the preview image may include extracting optical flow in the entire region of the preview image, and estimating the pixel movement based on the extracted optical flow.

In an embodiment, the method may further include, when no object identified from the preview image exists, determining movement information related to the preview image based on the estimated pixel movement.

In an embodiment, the identifying of one or more objects from the preview image may include distinguishing a background region and a foreground region from the preview image, and identifying the one or more objects based on the foreground region in the preview image.

In an embodiment, the determining of movement information related to the preview image may include determining weights according to respective areas of one or more foreground regions included in the preview image, and determining movement information related to the preview image by combining, based on the determined weights, objects included in each of the one or more foreground regions and the estimated pixel movement.

In an embodiment, the method may include, upon receiving the preview image, determining whether the preview image is a first frame acquired from the one or more cameras after execution of a camera application, when the preview image is identified as the first frame, generating a background model based on a probability distribution of pixels included in the preview image, and extracting a foreground region of the preview image based on the generated background model.

In an embodiment, the method may further include, when the preview image is identified as not being the first frame, updating the background model based on the preview image.

In an embodiment, the image capture parameter may include at least one of an international organization for standardization (ISO) film speed or a shutter speed of the one or more cameras.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (200) comprising:
one or more cameras (210);
a display (220);
at least one processor (240); and
a memory (250) configured to store instructions,
wherein the instructions, when executed by the at least one processor (240), cause the electronic device (200) to:
while a preview image acquired from the one or more cameras (210) is displayed on the display (220), analyze movement of the electronic device (200) or an object within the preview image;
based on the analysis, calculate movement information related to the preview image;
in response to receiving a user input for image capture, configure at least one image capture parameter, based on the calculated movement information; and
acquire an image captured based on the configured image capture parameter.

2. The electronic device of claim 1, further comprising one or more sensors (230) configured to detect movement of the electronic device,
wherein the instructions, when executed by the at least one processor (240), cause the electronic device (200) to:
while the preview image is displayed on the display (220), determine whether movement of the electronic device occurs, based on data acquired from the one or more sensors (230); and
in case that it is determined that movement of the electronic device occurs, determine the movement information related to the preview image, based on the data acquired from the one or more sensors (230).

3. The electronic device of claim 2, wherein the instructions, when executed by the at least one processor (240), cause the electronic device (200) to:
in case that it is determined that no movement of the electronic device occurs, estimate pixel movement for an entire area of the preview image;
identify one or more objects from the preview image; and
determine the movement information related to the preview image, based on the estimated pixel movement and the identified one or more objects.

4. The electronic device of claim 3, wherein the instructions, when executed by the at least one processor (240), cause the electronic device (200) to:
extract optical flow in the entire area within the preview image; and
estimate the pixel movement, based on the extracted optical flow.

5. The electronic device of claim 3, wherein the instructions, when executed by the at least one processor (240), cause the electronic device (200) to, in case that no object is identified from the preview image, determine the movement information related to the preview image, based on the estimated pixel movement.

6. The electronic device of claim 3, wherein the instructions, when executed by the at least one processor (240), cause the electronic device (200) to:
distinguish between a background area and a foreground area in the preview image; and
identify the one or more objects, based on the foreground area within the preview image.

7. The electronic device of claim 6, wherein the instructions, when executed by the at least one processor (240), cause the electronic device (200) to:
determine a weight according to the area of each of one or more foreground areas included in the preview image; and
based on the determined weight, combine an object included in each of the one or more foreground areas and the estimated pixel movement to determine the movement information related to the preview image.

8. The electronic device of claim 1, wherein the instructions, when executed by the at least one processor (240), cause the electronic device (200) to:
upon receiving the preview image, identify whether the preview image is a first frame acquired from the one or more cameras after a camera application is executed;
in case that the preview image is identified as the first frame, generate a background model, based on a probability distribution of pixels included in the preview image; and
extract a foreground area of the preview image, based on the generated background model.

9. The electronic device of claim 8, wherein the instructions, when executed by the at least one processor (240), cause the electronic device (200) to, in case that the preview image is identified as not being the first frame, update the background model, based on the preview image.

10. The electronic device of claim 1, wherein the image capture parameter comprises at least one of an international organization for standardization (ISO) film speed or a shutter speed of the one or more cameras (210).

11. A method comprising:
while displaying a preview image acquired from one or more cameras (210), analyzing movement of an electronic device (200) or an object within the preview image;
based on the analysis, calculating movement information related to the preview image;
in response to receiving a user input for image capture, configuring at least one image capture parameter, based on the calculated movement information; and
acquiring an image captured based on the configured image capture parameter.

12. The method of claim 11, wherein the analyzing of the movement of the electronic device or the object within the preview image comprises:
while the preview image is displayed on the display, determining whether movement of the electronic device occurs, based on data acquired from one or more sensors; and
in case that it is determined that movement of the electronic device occurs, determining the movement information related to the preview image, based on the data acquired from the one or more sensors.

13. The method of claim 12, wherein the analyzing of the movement of the electronic device or the object within the preview image comprises:
in case that it is determined that no movement of the electronic device occurs, estimating pixel movement for an entire area of the preview image;
identifying one or more objects from the preview image; and
determining the movement information related to the preview image, based on the estimated pixel movement and the identified one or more objects.

14. The method of claim 13, wherein the estimating of the pixel movement for the entire area of the preview image comprises:
extracting optical flow in the entire area within the preview image; and
estimating the pixel movement, based on the extracted optical flow.

15. The method of claim 11, further comprising:
upon receiving the preview image, identifying whether the preview image is a first frame acquired from the one or more cameras after a camera application is executed;
in case that the preview image is identified as the first frame, generating a background model, based on a probability distribution of pixels included in the preview image, and extracting a foreground area of the preview image, based on the generated background model; and
in case that the preview image is identified as not being the first frame, updating the background model, based on the preview image.
